(19) Europäisches Patentamt
European Patent Office
Office européen des brevets

(11) EP 0 791 972 B1

(12) EUROPEAN PATENT SPECIFICATION

(45) Date of publication and mention of the grant of the patent:
**13.06.2007 Bulletin 2007/24**

(51) Int Cl.:
***H01M 4/58*** *(2006.01)* ***C04B 35/524*** *(2006.01)*

(21) Application number: **97300907.9**

(22) Date of filing: **12.02.1997**

# (54) Lithium secondary battery

Sekundäre Lithiumbatterie

Pile secondaire au lithium

(84) Designated Contracting States:
**DE FR GB**

(30) Priority: **13.02.1996 JP 4845296**

(43) Date of publication of application:
**27.08.1997 Bulletin 1997/35**

(73) Proprietor: **HONDA GIKEN KOGYO KABUSHIKI KAISHA**
**Minato-ku,**
**Tokyo 107 (JP)**

(72) Inventors:
- **Sato, kenji**
  **1-chome#Wako-shi,**
  **Saitama 351 (JP)**
- **Oki, Naohiko**
  **1-chome#Wako-shi,**
  **Saitama 351 (JP)**
- **Komazawa, Eisuke**
  **1-chome#Wako-shi,**
  **Saitama 351 (JP)**
- **Demachi, Atsushi**
  **1-chome#Wako-shi,**
  **Saitama 351 (JP)**

(74) Representative: **Calamita, Roberto**
**Frank B. Dehn & Co.**
**St Bride's House**
**10 Salisbury Square**
**London EC4Y 8JD (GB)**

(56) References cited:
**EP-A- 0 567 658** **EP-A- 0 573 266**
**US-A- 4 615 959**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 791 972 B1

## Description

The present invention relates to a lithium secondary battery using a carbonaceous material as an anode, said carbonaceous material being able to reversibly absorb and desorb lithium.

In recent years, miniaturization of electronic devices has proceeded, which causes a demand for increased energy density of batteries, and various nonaqueous electrolyte batteries have been proposed.

For example, lithium secondary batteries have previously been known in which metallic lithium, lithium alloys represented by aluminum/lithium alloys, or carbon anodes are used as anodes for nonaqueous electrolyte batteries,

However, the lithium secondary batteries in which metallic lithium is used as anodes have been known to be inferior in cycle stability due to formation of dendrites.

Further, the lithium secondary batteries in which the lithium alloys represented by the aluminum/lithium alloys are used as anodes can not be said to fully take out the performance of the lithium secondary batteries, although an improvement in cycle stability is observed compared with metallic lithium.

For solving such problems, lithium secondary batteries have been proposed in which carbonaceous materials utilizing that carbon intercalation compounds of lithium are electrochemically easily formed are used as anode materials. Graphite and amorphous carbon absorbing lithium as a cluster are used as the carbonaceous materials.

Compared with metallic lithium and the lithium alloys, such carbonaceous materials are sufficiently gentle in reaction with water also in the charged state, namely in the state where lithium is intercalated in carbon, and the formation of dendrites with charge and discharge is also hardly observed. They are therefore excellent.

However, these carbonaceous materials bring about a rapid exothermic reaction by an increase in temperature in some cases, when they coexist with electrolysis solutions with lithium absorbed.

Such a rapid exothermic reaction significantly deteriorates the performance of anode-active materials. For large-sized lithium secondary batteries used in electric vehicles, the rapid exothermic reaction is particularly required to be prevented.

Further, the conventional carbonaceous materials such as graphite have the problems with regard to the performance of the anode-active materials, that the capacity is extremely low, compared with the theoretical capacity (assuming that the state of $LiC_6$ is the maximum capacity in charging), that the capacity is sharply lowered by repetition of charge and discharge, even if the initial capacity is relatively large, and that the performance is violently deteriorated by repetition of charge and discharge at high current density, even if the charge and discharge capacity is relatively large.

EP-A-567658 describes a carbon material obtained by heat treating an organic high molecular compound under an inert gas atmosphere at 500-1500°C.

Accordingly, the development of lithium secondary batteries which do not bring about such a rapid exothermic reaction and excellent in the performance of the secondary batteries have been strongly desired.

Contemplating such situations, the present inventors have studied cause from which the conventional carbonaceous materials bring about the rapid exothermic reaction by an increase in temperature. As a result, the present inventors have discovered that for graphite, lithium is absorbed as a stable ion, but a negatively charged graphite matrix is increased in reactivity with an electrolysis solution. On the other hand, for amorphous carbon absorbing lithium as a cluster, the lithium cluster having a high specific surface area has an activity identical to or higher than that of metallic lithium. From these facts, the present inventors have found out that such a high activity contributes to the rapid exothermic reaction.

It is therefore an object of the present invention to provide a lithium secondary batteries which is high in capacity and excellent in cycle stability, which can comply with charge and discharge at high current density, and which is always stable.

In accordance with the present invention, there is provided a lithium secondary battery comprising a carbonaceous material as an electrode, said carbonaceous material having a rise temperature of an exothermic peak higher than that of a carbonaceous material which cannot absorb lithium as a lithium molecule ($Li_2$), said exothermic peak appearing in a thermal analysis curve obtained by differential thermal analysis conducted at a programming temperature rate of 60°C/minute for 5 mg $\pm$ 0.5 mg of the carbonaceous material in which lithium is charged, and showing the largest decrease in weight of the carbonaceous material measured by thermogravimetry, and a gradient of a rising portion of the thermal analysis signal of said exothermic peak smaller than that of the carbonaceous material which cannot absorb lithium as a lithium molecule ($Li_2$).

These and other objects and advantages of this invention will become more apparent and more readily appreciated from the following detailed description of the presently preferred exemplary embodiments of the invention taken in conjunction with accompanying drawings, of which:

Fig. 1 is a chart showing a $^7$Li-NMR spectrum of a carbonaceous material in Example 1;
Fig. 2 is a chart showing a DTA curve and a TG curve in Example 1;
Fig. 3 is a chart showing a DTA curve and a TG curve in Example 1;

Fig. 4 is a chart showing a DTA curve and a TG curve in Comparative Example 2;

Fig. 5 is a view partially containing a cross sectional view showing one embodiment of a lithium secondary battery of the present invention; and

Fig. 6 is a $^7$Li-NMR spectrum chart of an amorphous material of Comparative Example 2 by which 300 Ah/kg of lithium is absorbed.

In a lithium secondary battery of the present invention, a carbonaceous material used as an electrode has a rise temperature of an exothermic peak which appears in a thermal analysis curve obtained by thermal analysis of the carbonaceous material in which lithium is charged, and which shows the largest decrease in weight of the carbonaceous material measured by thermogravimetry, said rise temperature being higher than that of a carbonaceous material which cannot absorb lithium as a lithium molecule, and having a gradient of a rising portion of the exothermic peak, said gradient being smaller than that of the carbonaceous material which cannot absorb lithium as a lithium molecule ($Li_2$).

Here, the exothermic peak appearing in the thermal analysis curve obtained by thermal analysis indicates an exothermic reaction due to thermal decomposition or primary transition by an increase in temperature, and the gradient of a rising portion of the exothermic peak shows the degree of rapidness of the exothermic reaction caused by the thermal decomposition or the like.

The term "carbonaceous material which can not absorb lithium as a lithium molecule" is the general term for the carbonaceous materials including graphite and amorphous carbon absorbing lithium as a cluster, as described above.

Examples of the thermal analysis methods include differential thermal analysis (DTA) and differential scanning calorimetry (DSC), but there is no particular limitation thereon.

When the thermal analysis is conducted by DTA, it is preferred to give the quantitative property to results of measurements by making the amount of samples constant. Further, when the thermal analysis is carried out by DSC, the calorific value is quantitatively measured by normal methods.

In the electrodes of the lithium secondary batteries, the stability of the carbonaceous materials with lithium carried thereon comes into question. The thermal analysis is therefore required to be conducted to the carbonaceous materials with lithium carried thereon.

Methods for allowing lithium to be carried on the carbonaceous materials may be any methods which have previously been employed. Methods for electrochemically doping the carbonaceous materials with lithium include, for example, a method of using metallic lithium as a counter electrode and allowing the carbonaceous material to stand in the state electrically short-circuited outside, thereby charging it (hereinafter referred to as the short-circuit method).

In the present invention, for observing thermal response to a rapid increase in temperature, the programming rate in thermal analysis is preferably 30°C/minute or more, and more preferably 50°C/minute to 100°C/minute.

When a plurality of exothermic peaks are present, the rise temperature and the gradient are determined for an exothermic peak which is largest in a decrease in weight measured by thermogravimetry (TG), because the exothermic peak largest in a decrease in weight shows the most violent exothermic reaction.

With respect to the carbonaceous material having a rise temperature of an exothermic peak which appears in a thermal analysis curve obtained by thermal analysis of the carbonaceous material in which lithium is charged, and which shows the largest decrease in weight of the carbonaceous material measured by thermogravimetry, said rise temperature being higher than that of a carbonaceous material which can not absorb lithium as a lithium molecule, and having a gradient of a rising portion of the exothermic peak, said gradient being smaller than that of the carbonaceous material which can not absorb lithium as a lithium molecule, said carbonaceous material is not thermally decomposed until it is elevated to a higher temperature, compared with the carbonaceous material which can not absorb lithium as a lithium molecule, and the exothermic reaction can be said to be gentler.

Such a carbonaceous material can therefore be considered to be difficult to react with an electrolyte and gentler in reaction.

For example, from Example 1 and Comparative Examples 1 and 2 of this application, such a carbonaceous material corresponds to a carbonaceous material having a rise temperature of an exothermic peak of 141°C or more, said exothermic peak appearing in a thermal analysis curve obtained by thermal analysis conducted at a programming rate of 60°C/minute for 5 mg $\pm$ 0.5 mg of a sample, and having a gradient of a rising portion of said exothermic peak of 30 $\mu$V/(s·mg) or less.

Preferred examples of the carbonaceous materials satisfying the conditions as described above include carbonaceous materials having condensed aromatic ring structures, and composed of randomly stacked structures.

The term "randomly stacked structure" as used herein means a structure which is entirely random in orientation of a plane of a condensed aromatic ring or has no stacked structure exceeding four layers, preferably exceeding three layers.

The reason why the carbonaceous materials having condensed aromatic ring structures and composed of randomly stacked structures are preferred is that the carbonaceous materials having such structures absorb lithium not only between layers by intercalation, but also as covalent $Li_2$ molecules, which causes less charge transfer to carbon net faces than for carbonaceous materials by which lithium is only absorbed by intercalation, resulting in structural stability even with lithium carried thereon.

It can be confirmed by the NMR spectra of carbonaceous materials with lithium carried thereon whether the carbonaceous materials absorb lithium as covalent $Li_2$ molecules or not. That is, the carbonaceous material by which lithium is absorbed as a covalent $Li_2$ molecule has at least two peaks of the chemical shift δ in a $^7$Li-NMR spectrum.

One peak (B) exists at 0±2 ppm and another peak (A) exists on the plus side of the peak (B), wherein an observation nucleus is $^7$Li, and the basis of the chemical shift is a value at the time when the peak of a 1 mol/liter aqueous solution of LiCl is taken as 0.

The presence of the peak (B) of the chemical shift δ within the above-mentioned range means that the density of unpaired electrons on lithium ions have become almost 0, namely that the lithium ions have been converted to covalent $Li_2$ molecules.

On the other hand, the chemical shift of intercalated lithium takes a positive value, and this corresponds to the above-mentioned peak (A) (Tanaka et al., Collected Summaries of Autumn Meeting of Electrochemical Society, Japan, 1992, page 129).

This positive chemical shift is caused by a paramagnetic shift due to a radical of the carbonaceous material. When lithium is absorbed in the carbonaceous material, the carbonaceous material receives an electron to keep electrical neutrality at the same time. Carbon which has received the electron is turned to a radical anion. Accordingly, the carbonaceous material which has absorbed lithium has an unpaired electron, and the chemical shift is generated by an interaction between magnetic moments of the electron and a nucleus. According to the theory, the sign of the chemical shift due to an interaction with an electron spin agrees with the sign of the hyperfine coupling coefficient of the electron with the nucleus. The sign of the hyperfine coupling coefficient, of $^7$Li is positive, and the radical-induced chemical shift becomes positive. The degree of the chemical shift is proportional to the density of unpaired ions on the observation nucleus. The intercalated lithium ions are trapped between graphite layers. When the graphite layers are changed to the radial anions, therefore, the density of unpaired electrons exists on the lithium ions to some extent, which causes the positive chemical shift.

Here, the peak (A) exists preferably at 4 to 100 ppm, and more preferably at 10±7 ppm.

The carbonaceous materials having condensed aromatic ring structures and composed of randomly stacked structures can be obtained by heat treatment of organic polymers having factors for inhibiting the stack structures of the carbonaceous materials.

The organic polymers having factors for inhibiting the stack structures of the carbonaceous materials include, for example, organic polymers having aromatic structures each containing at least one structure selected from the group consisting of a bending structure including o-bonding or m-bonding, a branching structure and a crosslinking structure. Further, organic polymers containing organic compounds having 5-membered or 7-membered rings may also be used.

Examples of such organic polymers include heat-resistant organic polymers such as polyamides, polyimides, polyesters, polyetherketones, polybenzyls, polyamideimides and phenol resins, and non-heterocyclic polymers in which conjugated polymer structures are developed are preferred among others. Such polymers are polyphenylene, poly(p-phenylenevinylene) (PPV), poly(p-phenylenexylene) (PPX), polystyrene and novolak resins, and polyphenylene is particularly preferred.

Of these polymers, polymers which are low in crystallinity are preferred, and it is desirable that the half width of a diffraction peak in the vicinity of 2θ=20° in X-ray diffraction is preferably 0.75° or more, and more preferably 0.95° or more.

Furthermore, it is preferred that the organic polymers contain quinoid structures. The inclusion of the quinoid structure can be confirmed by observation of an absorption edge within the range of 600 to 900 nm in a diffuse reflectance spectrum of the powdered organic polymer.

Preferred examples of such organic polymers include polyphenylene which is high in the degree of polymerization to some extent. In the present invention, the R value defined by the following equation is applied as a measure of the polymerization degree of polyphenylene. This R value is preferably 2 or more, and more preferably 2.3 to 20, among others.

$$R = A[\delta(para)]/\{A[\delta(monol)] + A[\delta(mono2)]\}$$

wherein A[δ(para)] represents the absorbance of an absorption band of an out-of-plane deformation vibration mode of C-H in the vicinity of 804 $cm^{-1}$ in an infrared absorption spectrum, and A[δ(monol)] and A[δ(mono2)] represent the absorbance of absorption bands of the terminal phenyl groups in the vicinity of 760 $cm^{-1}$ and 690 $cm^{-1}$, respectively.

Various methods are known as methods for synthesizing polyphenylene. Examples thereof include a method of variously combining Lewis acid catalysts with oxidizing agents to polymerize benzene under mild reaction conditions, thereby obtaining polyphenylene (P. Kovacic and A. Kyriakis, J. Am. Chem. Soc., 85, 454-458, 1963) (hereinafter referred to as the Kovacic method), a method of dehydrogenating poly(l,3-cyclohexadiene) to obtain polyphenylene (J. Am. Chem. Soc., 81, 448-452, 1959), and the Yamamoto method in which dihalobenzenes are subjected to dehalogenation polymerization using nickel catalysts (T. Yamamoto and A. Yamamoto, Chemistry Letters, 353-356, 1977). In the case of the above-mentioned Kovacic method, the use of an aluminum chloride-cupric chloride catalyst results in acquisition of polyphenylene in high yields at about 35°C for about 30 minutes.

In the present invention, there is no particular limitation on the methods for synthesizing polyphenylene. However, the Kovacic method is suitable for the reasons that the production cost is low, and that the carbonization efficiency is excellent because of partial crosslinking. It has been proved by ESR (electron spin resonance) spectroscopy (G. Froyer et al., Polymer, 23, 1103, 1982) and mass spectrometric analysis (C. E. Brown et al., J. Polymer Science, Polym. Chem. Ed., 24, 255, 1986) that polyphenylene having the condensed ring structure is obtained by the Kovacic method.

In contrast, poly(p-phenylene) obtained by the Yamamoto method has no condensed ring structure, and an amorphous carbonaceous material obtained by heat treatment of this polymer can not absorb lithium as a covalent $Li_2$ molecule. This polymer is therefore unfavorable.

The organic polymer is heat treated preferably in the vicinity of the carbonization temperature thereof, namely within the range of the carbonization temperature to the carbonization temperature + 300°C. The carbonization temperature is a temperature at which elimination of hydrogen and the like from the organic polymer of a starting material occurs, and can be measured by TG (thermogravimetry) or DTA (differential thermal analysis).

If the heat treatment temperature is lower than the carbonization temperature, carbonization is not performed. On the other hand, if the heat treatment temperature exceeds this range, carbonization proceeds too much to leave organic components. The heat treatment within this range results in incomplete carbonization to provide carbonaceous materials in which carbon components and organic components are present as a mixture.

When the organic polymer is polyphenylene, the heat treatment temperature is 650°C to 900°C, and preferably 670°C to 780°C. If the heat treatment temperature is less than 650°C, carbonization is too insufficient to absorb lithium. On the other hand, if the heat treatment temperature exceeds 900°C, carbonization proceeds too much to absorb lithium as a covalent $Li_2$ molecule.

It is important for obtaining electrodes excellent in cycle stability that the carbon components and the organic components are present as a mixture in the carbonaceous materials. The reason for this is that the presence of the carbon components and the organic components as a mixture in the carbonaceous materials results in difficulty of causing the collapse of structures, even if changes in volume take place by the charge and discharge reaction.

In the carbonaceous materials, the carbon components are contained preferably in an amount of 80 to 99% by weight, and more preferably in an amount of 90 to 99% by weight. The organic components are contained preferably in an amount of 1 to 20% by weight, and more preferably in an amount of about 1 to about 10% by weight. The amount of the carbon components as used herein is the amount of carbon determined by elementary analysis. The amount of the organic components is the amount of elements contained in the starting materials, such as hydrogen, nitrogen, sulfur and oxygen, except for carbon.

The organic polymers may be heat treated either in an inactive atmosphere or a reducing atmosphere. Examples of the atmospheres include nitrogen, argon and hydrogen atmospheres. The heat treatment time is preferably 0.5 to 3 hours, wherein the heat treatment time is a time after arrival at an established temperature.

As this specific heat-treating method, the temperature may be elevated to the weight decrease initiating temperature at any programming rate, but the temperature is preferably raised from the weight decrease initiating temperature to the heat treatment temperature preferably at a programming rate of 5°C/hour to 200°C/hour, more preferably 20°C/hour to 100°C/hour.

The hydrogen/carbon atomic ratio (H/C) of the carbonaceous material obtained by the heat treatment is preferably 0.05 to 0.6, and more preferably 0.15 to 0.6. The material having a ratio of less than 0.05 develops the graphite structure and destructs the crystal structure by expansion and contraction of crystals upon the doping-dedoping reaction of lithium corresponding to charge and discharge, which results in deterioration of cycle stability. On the other hand, the material having a ratio exceeding 0.6 is markedly decreased in discharge capacity.

The carbonaceous materials thus obtained by heat treatment are usually powdery or solid. When used as electrode materials, the carbonaceous materials are mechanically pulverized for use.

In this case, the particle size is not necessarily restricted. However, high-performance electrodes can be obtained by reducing the average particle size to 5 μm or less.

Electrode bodies can be obtained by mixing binders with these carbonaceous material powders, followed by rolling with rolls. The amount of the binder compounded is 5 to 50 parts by weight, and preferably 5 to 30 parts by weight, per 100 parts by weight of electrode material.

Here, either organic or inorganic binders can be used as the binders. As the organic binders, in addition to polyethylene described above, a number of binders such as fluorine resins such as polytetrafluoroethylene and polyvinylidene fluoride, polyvinyl alcohol and polyvinyl chloride can be used. In this case, heat treatment in the vicinity of the carbonization temperature is required after mixture with the binders, except for polyethylene.

Further, as the inorganic binders, silicon binders such as silicon glass can be used. Also in this case, heat treatment at a temperature exceeding a melting point is required to allow them to exhibit the performance as the binders.

The production of the electrode bodies is not limited to the above-mentioned methods. For example, the binders can be mixed with the organic polymers which are starting materials, and the resulting mixtures can be formed and heat treated to directly obtain the electrode bodies. Further, organic fibers can also be mixed with the carbonaceous materials obtained by heat treatment to obtain the electrode bodies, as described below.

Examples of the organic fibers to be mixed with the carbonaceous materials include cellulose fiber, rayon fiber, pitch fiber, lignin fiber, phenol fiber and acrylic resin fiber. Cellulose fiber dispersible in water and low in cost is preferably used among others.

There in no particular limitation on the form of the organic fibers, and fibers variously shaped such as chopped yarns, strands and wavy fibers can be used. Such organic fibers not only act as supports when the carbonaceous materials are formed into films or sheets, but also have the function of giving a definite thickness to the films or the sheets.

The length of the organic fibers is preferably 0.2 to 10 mm, and more preferably 0.2 to 2 mm. The organic fibers having a length of less than 0.2 mm do not exhibit their bulkiness, whereas exceeding 10 mm results in fear of reduced formability.

It is preferred that the organic fibers are well dried at the time of use.

Preliminary heat treatment of the organic fibers can give contraction to the organic fibers to decrease contraction in subsequent heating. The heating temperature is required to be a temperature at which the strength of the organic fibers is not impaired, and it is preferably within the range of 120°C to 250°C.

As a method for forming the carbonaceous material and the organic fiber into the film or the sheet, the paper making method is most preferred. The paper making method is a method in which the carbonaceous material and the organic fiber are suspended in an organic solvent to prepare a suspended solution, which is spread to a specified thickness, and then, the organic solvent is evaporated to form the film or the sheet.

The mixing ratio of the organic fiber to the carbonaceous material is preferably 10 to 70% by weight, and more preferably 15 to 40% by weight. If the organic fiber is contained in a ratio of less than 10% by weight, the formability is reduced. On the other hand, exceeding 70% by weight results in fear of reduced discharge capacity as an electrode.

In paper making, the carbonaceous material is first mixed with the organic fiber in the solvent to prepare the suspension. The solvent used herein can be appropriately selected. When cellulose fiber is used as the organic fiber, water, ethanol or a mixture thereof is preferably used.

The total of the carbonaceous material and the organic fiber preferably accounts for 1 to 5% by weight of the dispersion, particularly 1.7 to 3.3% by weight. If the ratio is less than 1% by weight, the emulsion is difficult to be homogenized. On the other hand, if the ratio exceeds 5% by weight, the viscosity is increased too much, resulting in fear of difficulty to form the film or the sheet uniform in thickness. Although any device may be used for mixing of the carbonaceous material, the organic fiber and the organic solvent, a ball mill or a mixer is preferably used.

In this case, a surfactant, a binder or a fiber for reinforcement may be added to the organic solvent, if necessary.

The surfactants include, for example, polyoxyethylene phenyl ether, polyoxyoctyl phenyl ether, ethanol and methanol.

The binders include synthetic resin emulsions, as well as cationized starch, cationized or anionized polyacryl amide, melamine resins, urea resins, epoxidated amides and carboxyl-modified polyvinyl alcohol.

The fibers for reinforcement include vinyl chloride fiber and rayon for paper making.

The film or the sheet thus obtained is dried at a temperature of 50°C to 80°C to evaporate the solvent (the film or the sheet after drying is hereinafter referred to as a "fiber film or sheet"). The thickness of the fiber film or sheet is preferably 0.05 to 1 mm, and more preferably 0.2 to 1 mm. In the present invention, it becomes possible to control the thickness of the fiber film or sheet by changing the weight of the fiber film or sheet per unit area in a manner similar to that of the conventional paper making methods.

Here, the fiber film or sheet contains the above-mentioned organic fiber, so that the thickness thereof does not vary so much even when the solvent is removed by evaporation, and voids are formed in the fiber film or sheet.

The fiber film or sheet thus obtained is impregnated with a thermosetting resin, followed by heating to harden the resin. In this manner, the impregnated thermosetting resin is hardened by heating to form a thin plate (hereinafter referred to as a "fiber thin plate").

Here, although the thermosetting resins include phenol resins and polyimide resins, resolic phenol resins are preferred because of their low cost.

The resolic phenol resins, which are produced by the addition condensation reaction under alkaline conditions, are preferably synthesized in the presence of LiOH catalyst or $NH_4OH$. For the phenol resins synthesized in the presence of LiOH catalyst or $NH_4OH$, impurities are slightly contained in the electrodes, or not harmful if they are present. In contrast, for the phenol resins synthesized in the presence of NaOH catalyst, sodium components unfavorably remain in the electrodes.

Further, the use of thermoplastic resins unfavorably fails to retain the form of thin plates in heat treatment described below.

The fiber film or sheet is impregnated with the thermosetting resin preferably in an amount of 10 to 200% by weight, and particularly in an amount of 50 to 150% by weight, as a non-volatile component, based on the fiber film or sheet. If the amount of the thermosetting resin is less than 10% by weight, it is difficult to obtain the effect as the binder. On the other hand, if the amount of the thermosetting resin exceeds 200% by weight, it covers the carbonaceous material too much, resulting in fear of a reduction in function as an active material.

Then, the fiber thin plates are heat treated to prepare the carbon thin plates used as the electrodes of the lithium secondary batteries.

Here, the heat treatment is conducted to such a degree that the organic fibers and the thermosetting resins constituting the fiber thin plates are carbonized in the amorphous state. The heat treatment is therefore carried out preferably at 600°C to 1,200°C for 0 to 4 hours, and more preferably at 650°C to 800°C for 0.5 to 2 hours. At this time, it is preferred that the temperature is gradually elevated, preferably at 3°C/minute or less. The heat treatment is preferably conducted in a non-oxidative atmosphere, particularly in an inactive gas atmosphere. In order to keep the carbon thin plate flat, it is preferred that the heat treatment is performed with the carbon thin plate put between flat graphite plates.

Lithium is allowed to be carried on the electrode bodies thus obtained, thereby preparing the electrodes for lithium secondary batteries.

Methods for allowing lithium to be carried on the electrode bodies include any methods which have previously been employed, such as thermal diffusion by contact with lithium foil, electrochemical doping of lithium in lithium salt solutions, and diffusion of lithium in carbon by immersion in molten lithium.

In the electrodes for lithium secondary batteries, the lithium ions do not go in and out between the layers, so that the structure of the material is little changed by absorption and desorption. Furthermore, since the stacked structure is not developed, the paths of absorbing/desorbing lithium ions are not restricted to one direction parallel to the plane, and can permeate from any directions. The electrodes have therefore the advantage of having a high absorption-desorption reaction rate.

On the other hand, there is no particular limitation on cathode-active materials used in the lithium secondary batteries of the present invention, and various cathodes, for example, metal oxides such as manganese dioxide and vanadium pentaoxide or organic polymers such as polypyrrole can be used.

As nonaqueous electrolytes used in the lithium secondary batteries of the present invention, any nonaqueous substances may be employed as long as they are chemically stable to cathode materials and anode materials, and lithium ions can move therein to electrochemically react with the cathode-active materials. As the electrolytes, compounds composed of combinations of cations and anions are particularly used. The cations include $Li^+$, and examples of the anions include halide anions of the group Va elements such as $PF_6^-$, $AsF_6^-$ and $SbF_6^-$; halogen anions such as $I^-$, $I_3^-$, $Br^-$ and $Cl^-$; perchlorate anions such as $ClO_4^-$; and anions such as $HF_2^-$, $CF_3SO_3^-$ and $SCN^-$. However, they are not necessarily limited to these anions. Concrete examples of the electrolytes having such cations and anions include $LiPF_6$, $LiAsF_6$, $LiSbF_6$, $LiBF_4$, $LiClO_4$, LiI, LiBr, LiCl, $LiAlCl_4$, $LiHF_2$, LiSCN and $LiCF_3SO_3$. Of these, $LiPF_6$, $LiAsF_6$, $LiSbF_6$, $LiBF_4$, $LiClO_4$ and $LiCF_3SO_3$ are particularly preferred.

The nonaqueous electrolytes are usually used in the state where they are dissolved in solvents. In this case, there is no particular limitation on the solvents. However, the solvents having a relatively large polarity are favorably used. Specifically, they include propylene carbonate, ethylene carbonate, tetrahydrofuran, 2-methyltetrahydrofuran, dioxolane, dioxane, ethylene glycol dimethyl ether, glymes such as diethylene glycol dimethyl ether, lactones such as γ-butylolactone, phosphates such as triethyl phosphate, borates such as triethyl borate, sulfur compounds such as sulfolane and dimethyl sulfoxide, nitriles such as acetonitrile, amides such as dimethylformamide and dimethylacetamide, dimethyl sulfate, nitromethane, nitrobenzene and dichloroethane, which may be used alone or as a mixture of at least two kinds of them. Of these, one selected from propylene carbonate, ethylene carbonate, butylene carbonate, tetrahydrofuran, 2-methyltetrahydrofuran, dioxane, ethylene glycol dimethyl ether, dioxolane and γ-butylolactone, or a mixture of at least two kinds of them is particularly preferred.

Further, as these nonaqueous electrolytes, there can be used organic solid electrolytes in which polymers such as polyethylene oxide, polypropylene oxide, polyethylene oxide crosslinking with isocyanates and phosphazene polymers having ethylene oxide oligomers as side chains are impregnated with the above-mentioned nonaqueous electrolytes; and inorganic solid electrolytes such as inorganic ion derivatives such as $Li_3N$ and $LiBCl_4$, and lithium glass such as $Li_4SiO_4$ and $Li_3BO_3$.

The lithium secondary battery using the electrode material comprising the alkali metal-absorbing/desorbing carbonaceous material of the present invention will be described in more detail with reference to the drawing.

That is, in the lithium secondary battery using the cathode material of the present invention, as shown in Fig. 5, the inside of a button-shaped cathode case 10 whose opening 10a is sealed with an anode cap 20 is partitioned with a separator 30 having fine pores, and a cathode 50 having a cathode collector 40 arranged on the side of the cathode case 10 is accommodated in the partitioned space on the cathode side, whereas an anode 70 having an anode collector 60 arranged on the side of the anode cap 20 is accommodated in the space on the anode side.

As the separator 30, one which is porous and through which the electrolytes can be passed or which can contain them, for example, a nonwoven, woven or knitted fabric made of a synthetic resin such as polytetrafluoroethylene, polypropylene or polyethylene, or a glass film can be used.

The carbonaceous materials used in the lithium secondary batteries of the present invention are structurally stable even with lithium carried thereon, and can be substantially increased in the amount of lithium ions absorbed. Further, no changes in structure are observed in absorption and desorption, and the rate of the absorption-desorption reaction of lithium ions is also high. The lithium secondary batteries of the present invention are high in capacity, excellent in cycle stability and able to comply with charge and discharge at high current density, thus providing lithium secondary batteries which are always stable.

Further, the lithium secondary batteries of the present invention are very effective, particularly for more enhancing the stability of large-sized nonaqueous electrolytic solution secondary batteries such as those for use in electric vehicles.

The present invention is hereinafter described in more detail with reference to examples, but it is not limited to these examples.

Example 1

Benzene was polymerized in the presence of cupric chloride and aluminum chloride by the Kovacic method to obtain polyphenylene. This was dried and classified to obtain a powder having a particle size of 300 μm or less. The temperature of this powder was elevated in an atmosphere of nitrogen from room temperature to 500°C for 2 hours, and thereafter elevated from 500°C to 700°C for 5 hours. Then, the powder is kept at 700°C for 1 hour to conduct heat treatment. Results of elemental analysis indicated that the heat-treated powder thus obtained consisted of hydrogen and carbon atoms, and had an H/C atomic ratio of 0.24 and a true density of 2.02 g/cm$^3$. No peak was observed by X-ray diffraction, which proved that the heat-treated powder was amorphous.

Then, 1.4 g of the heat-treated powder, 0.6 g of cellulose, 0.1 g of Denka Black (manufactured by Denki Kagaku Kogyo K. K.), 20 ml of ethanol and 20 ml of a 5% aqueous solution of polyoxyethylene octyl phenyl ether were mixed using a mixer for 10 minutes. The resulting mixture was poured into a 130 mm X 130 mm stainless steel vat, and dried to obtain a paper-like carbon film.

On the other hand, 94 g of phenol, 4 ml of aqueous ammonia, 10 g of $LiOH \cdot H_2O$ and 97 g of a 37% (by weight) aqueous solution of formaldehyde were placed in a 500-ml separable flask in this order, and boiled for 60 minutes with mixing. After termination of the reaction, the reaction product was heated and dehydrated under a reduced pressure of about 20 mmHg, and dehydration was stopped at the time when the resin temperature reached 70°C. The resulting product was allowed to cool, and 200 ml of methanol was added thereto at the time when the resin temperature reached 65°C, thereby obtaining a varnish of a resolic phenol resin.

The carbon film was impregnated with 4 ml of the above-mentioned varnish, and maintained at 80°C for a day to harden the varnish. After hardening, the film was further maintained at 160°C for 10 minutes while applying a pressure of 100 kgf/cm$^2$. The resulting film was put between graphite plates, and the temperature thereof was elevated in an atmosphere of nitrogen from room temperature to 160°C for 30 minutes. Then, the film was elevated in temperature to 640°C for 3 hours, and maintained at 640°C for 1 hour to conduct heat treatment. After the heat treatment, the film was cut out to a size of 40 mm X 40 mm to obtain a carbon electrode.

A cell was assembled using the resulting electrode, a 40 mm X 40 mm Li foil as a counter electrode, glass fiber filter paper as a separator, and a 1 mol /liter solution of $LiPF_6$ in an ethylene carbonate/1,2-dimethoxyethane (ratio by volume = 1:1) solvent as an electrolyte, and electrically short-circuited outside. Then, the cell was allowed to stand overnight to charge the carbon electrode until the same potential as that of the counter electrode was attained (the short-circuit method). The charge provided an initial discharge capacity of 680 Ah/kg per unit weight of the carbon electrode. Discharge was carried out at a constant current discharge of 1.6 mA/cm$^2$ and at a discharge cut-off potential of 3 V (to $Li/Li^+$), and the assembly of the cell and the charge by short circuit were performed in an argon-replaced glove box.

The charged electrode was washed with 1,2-dimethoxyethane to remove salts. A $^7$Li-NMR spectrum is shown in Fig. 1. In Fig. 1, the waveform was tried to be separated into a Gaussian curve and a Lorenzian curve. A band having the waveform of the Lorenzian curve with a chemical shift of -0.62 ppm corresponds to a covalent $Li_2$ molecule. A band having the waveform of the Gaussian curve with a chemical shift of 9.85 ppm corresponds to ionic lithium.

For the charged electrode, 5 mg of a sample was subjected to DTA measurement at a programming rate of 60°C/minute. The electrode was taken out of the cell in the argon-replaced glove box and immediately subjected to TG-DTA measurement so that the difference from the state in the cell did not arise. Accordingly, the amount of the electrolyte absorbed by the carbon electrode was also similar to that in the cell. The thermal analysis was conducted by use of a differential thermal analyzer (TAS-200 manufactured by Rigaku Corporation).

Variation with the lapse of time of a DTA signal of this example are shown as a DTA curve in Fig. 2. The DTA signal shows the potential difference produced in a thermocouple by the temperature difference between the sample and a reference material.

Referring to Fig. 2, three exothermic peaks appear at 89.5°C, 169.1°C and 270.0°C. Of these exothermic peaks, the rise temperature and the gradient of the rising portion of the second peak (169.1°C) corresponding to a violent decrease in weight was employed as an indication of the rapidness of the exothermic reaction in elevating the temperature.

The rise temperature was determined by the program for analysis belonging to the DTA equipment. The gradient was calculated from an enlarged view of the corresponding portion of the DTA curve, and converted to a value per unit weight of the sample.

These results are shown in Table 1.

Comparative Example 1

A cell was assembled and charged by the short-circuit method in the same manner as with Example 1 with the exception that a 40 mm X 40 mm electrode was prepared by use of man-made graphite and a PVDF binder (manufactured by Kureha Chemical Industry Co., Ltd.), and that a 1 mol /liter solution of $LiPF_6$ in an ethylene carbonate/dimethyl carbonate (ratio by volume = 1:1) solvent as an electrolyte. The initial discharge capacity was 330 Ah/kg.

The DTA measurement was made in the same manner as with Example 1. The DTA curve obtained is shown in Fig. 3.

Referring to Fig. 3, two exothermic peaks at 87.9°C and 170.6°C, and an endothermic peak at 606.4°C are observed, and the second exothermic peak (170.6°C) corresponding to a violent decrease in weight shows a very abrupt rising.

The rise temperature and the gradient of the rising portion of the second exothermic peak (170.6°C) are shown in Table 1.

Comparative Example 2

A cell was assembled and charged by the short-circuit method in the same manner as with Example 1 with the exception that a 40 mm X 40 mm electrode was prepared by use of an amorphous carbonaceous material of the type of absorbing lithium as a cluster, which was produced from pitch. The initial discharge capacity was 550 Ah/kg.

The DTA measurement was made in the same manner as with Example 1. The DTA curve obtained is shown in Fig. 4.

Referring to Fig. 4, two exothermic peaks and an endothermic peak are observed, and the second exothermic peak (172.4°C) corresponding to a violent decrease in weight shows a very abrupt rising.

The rise temperature and the gradient of the rising portion of the second exothermic peak (172.4°C) are shown in Table 1.

Further, referring to Fig. 6, no covalent band is observed in the vicinity of 0 ppm in chemical shaft in a $^7$Li-NMR spectrum of the amorphous carbonaceous material of Comparative Example 2 by which lithium is absorbed. The maximum band is present in the vicinity of 100 ppm, and this is assigned to the lithium cluster. An intercalation band is also observed in the vicinity of 30 ppm. A band observed in the vicinity of 270 ppm is caused by a metal ion.

This spectrum proves that the carbonaceous material of Comparative Example 2 can not absorb lithium as a covalent $Li_2$ molecule.

Table 1

| | Example 1 | Comparative Example 1 | Comparative Example 2 |
|---|---|---|---|
| Amount of Lithium Absorbed | 680 | 330 | 550 |
| Exothermic Peak | | | |
| Rise Temp. (°C) | 146.2 | 130.0 | 140.1 |
| Gradient ($\mu V/s^{-1}mg^{-1}$) | 0. 93 | 36.09 | 34.09 |

The result shown in Table 1 indicate that the gradient of the rising portion of the exothermic peak of Example 1 is extremely low, compared with those of Comparative Examples 1 and 2. Further, Example 1 also shows the highest exothermic peak rise temperature.

The above indicates that the carbonaceous material of Example 1 greatest in the amount of lithium absorbed reacts gently even by a rapid increase in temperature.

## Claims

1. A lithium secondary battery comprising a carbonaceous material as an electrode, said carbonaceous material having a rise temperature of an exothermic peak higher than that of a carbonaceous material which cannot absorb lithium as a lithium molecule ($Li_2$), said exothermic peak appearing in a thermal analysis curve obtained by differential thermal analysis conducted at a programming temperature rate of 60°C/minute for 5 mg ± 0.5 mg of the carbonaceous material in which lithium is charged, and showing the largest decrease in weight of the carbonaceous material measured by thermogravimetry, and a gradient of a rising portion of the thermal analysis signal of said exothermic peak smaller than that of the carbonaceous material which cannot absorb lithium as a lithium molecule ($Li_2$).

2. A lithium secondary battery as claimed in claim 1, in which said carbonaceous material has a rise temperature of an exothermic peak of 141°C or more, said exothermic peak appearing in the thermal analysis curve obtained by differential thermal analysis conducted at a programming temperature rate of 60°C/minute for 5 mg ± 0.5 mg of a sample, and a gradient of a rising portion of the thermal analysis signal of said exothermic peak of 30 μV/(s.mg) or less.

3. A lithium secondary battery as claimed in claim 1 or claim 2, in which said carbonaceous material is a carbonaceous material obtained by heat treatment of polyphenylene.

4. A lithium secondary battery as claimed in claim 3 in which said carbonaceous material is produced at a heat temperature of 650 to 900°C from polyphenylene, said polyphenylene being produced by the Kovacic method.

## Patentansprüche

1. Eine sekundäre Lithiumbatterie umfassend ein kohlenstoffhaltiges Material als Elektrode, wobei das kohlenstoffhaltige Material eine Anstiegstemperatur eines exothermen Peaks hat, die höher ist als die eines kohlenstoffhaltigen Materials, das Lithium nicht als Lithiummolekül ($Li_2$) absorbieren kann und eine Steigung des ansteigenden Stücks des Signals aus der Thermoanalyse von dem exothermen Peak hat, die kleiner ist als die eines kohlenstoffhaltigen Materials, welches Lithium nicht als Lithiummolekül ($Li_2$) absorbieren kann, wobei der exotherme Peak in der Kurve einer Thermoanalyse erscheint, die mittels Differentialthermoanalyse erhalten wird, durchgeführt bei einem programmierten Temperaturanstieg von 60 °C/Minute für 5 mg ± 0,5 mg kohlenstoffhaltiges Material, in das Lithium geladen ist, und den größten Gewichtsverlust des kohlenstoffhaltigen Materials, gemessen mittels Thermogravimetrie, aufweist.

2. Eine sekundäre Lithiumbatterie nach Anspruch 1, in der das kohlenstoffhaltige Material eine Anstiegstemperatur des exothermen Peaks von 141 °C oder mehr hat und eine Steigung des ansteigenden Stücks des Signals aus der Thermoanalyse von dem exothermen Peak von 30 μV/(s-mg) oder weniger hat, wobei der exotherme Peak in der Kurve der Thermoanalyse erscheint, die mittels Differentialthermoanalyse erhalten-wird, durchgeführt für 5 mg ± 0,5 mg Probe bei einem programmierten Temperaturanstieg von 60 °C/Minute.

3. Eine sekundäre Lithiumbatterie nach Anspruch 1 oder Anspruch 2, in der das kohlenstoffhaltige Material ein kohlenstoffhaltiges Material ist, das durch Wärmebehandlung von Polyphenylen erhalten wird.

4. Eine sekundäre Lithiumbatterie nach Anspruch 3, wobei das kohlenstoffhaltige Material bei einer Heiztemperatur von 650 bis 900 °C aus Polyphenylen hergestellt wird, und wobei das Polyphenylen nach der Kovacic-Methode hergestellt wird.

## Revendications

1. Pile secondaire au lithium comprenant un matériau carboné en tant qu'électrode, ledit matériau carboné ayant une température ascendante d'un pic exothermique supérieure à celle d'un matériau carboné qui ne peut pas absorber le lithium sous la forme d'une molécule de lithium ($Li_2$), ledit pic exothermique apparaissant dans une courbe d'analyse thermique obtenue par analyse thermique différentielle effectuée à une vitesse de température programmée de 60 °C/minute pour 5 mg ± 0,5 mg du matériau carboné dans lequel du lithium est chargé, et présentant la plus grande diminution de poids du matériau carboné mesurée par thermogravimétrie, et un gradient d'une partie ascendante du signal d'analyse thermique dudit pic exothermique plus petit que celui du matériau carboné qui ne peut pas absorber le lithium sous la forme d'une molécule de lithium ($Li_2$).

2. Pile secondaire au lithium selon la revendication 1, dans laquelle ledit matériau carboné a une température ascendante d'un pic exothermique de 141°C ou plus, ledit pic exothermique apparaissant dans la courbe d'analyse thermique obtenue par analyse thermique différentielle effectuée à une vitesse de température programmée de 60 °C/minute pour 5 mg $\pm$ 0,5 mg d'un échantillon, et un gradient d'une partie ascendante du signal d'analyse thermique dudit pic exothermique de 30 $\mu$V/(s.mg) ou moins.

3. Pile secondaire au lithium selon la revendication 1 ou la revendication 2, dans laquelle ledit matériau carboné est un matériau carboné obtenu par traitement thermique de polyphénylène.

4. Pile secondaire au lithium selon la revendication 3, dans laquelle ledit matériau carboné est produit à une température de chauffage de 650 à 900 °C à partir de polyphénylène, ledit polyphénylène étant produit par le procédé de Kovacic.

Fig. 1

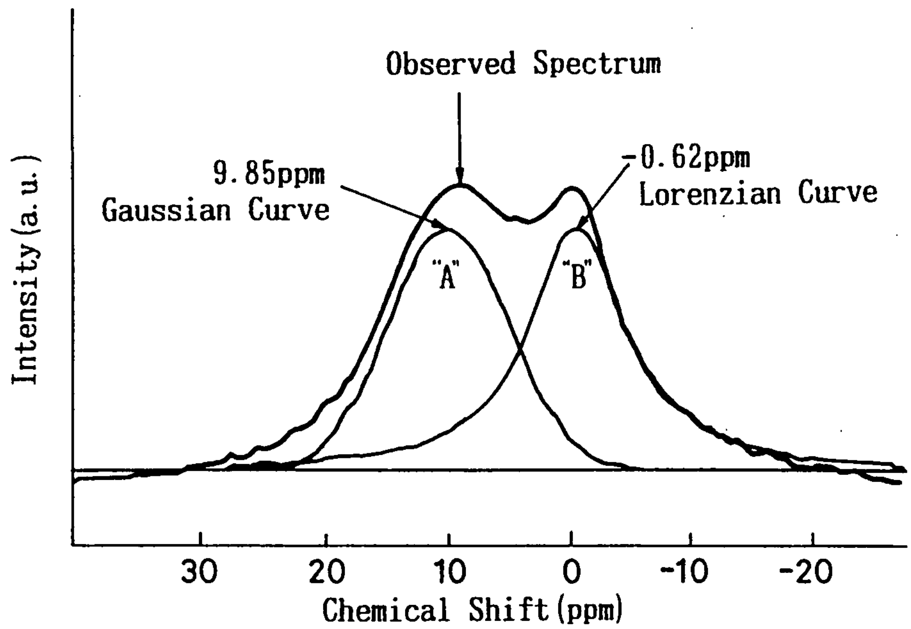
Observed Spectrum
9.85ppm
Gaussian Curve
-0.62ppm
Lorenzian Curve
"A"
"B"
Intensity (a.u.)
30
20
10
0
-10
-20
Chemical Shift (ppm)

Fig. 2

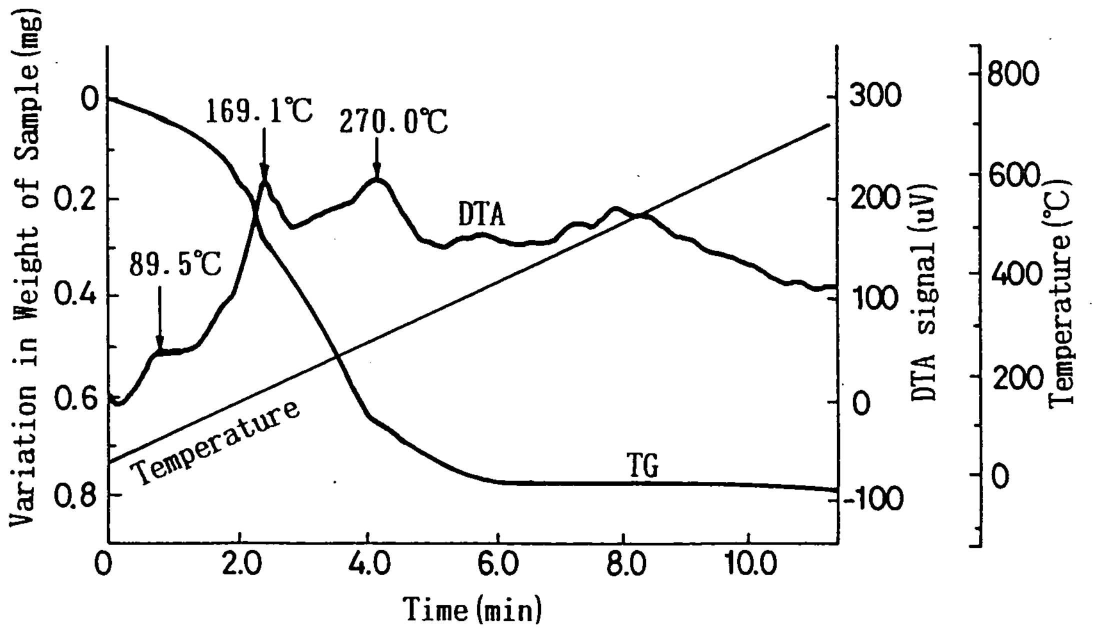
Variation in Weight of Sample (mg)
0
0.2
0.4
0.6
0.8
169.1℃
270.0℃
89.5℃
DTA
TG
Temperature
300
200
100
0
-100
DTA signal (uV)
800
600
400
200
0
Temperature (°C)
0
2.0
4.0
6.0
8.0
10.0
Time (min)

Fig. 3

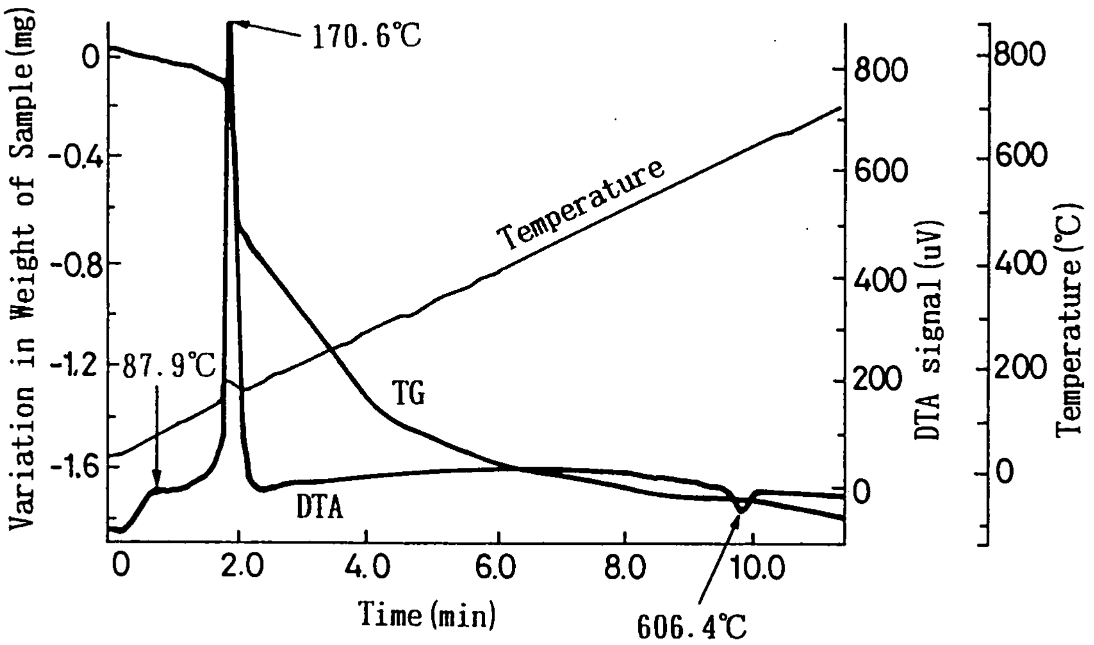
170.6℃
87.9℃
606.4℃
Temperature
TG
DTA
Variation in Weight of Sample (mg)
0
-0.4
-0.8
-1.2
-1.6
0
2.0
4.0
6.0
8.0
10.0
Time (min)
800
600
400
200
0
DTA signal (uV)
800
600
400
200
0
Temperature (℃)

Fig. 4

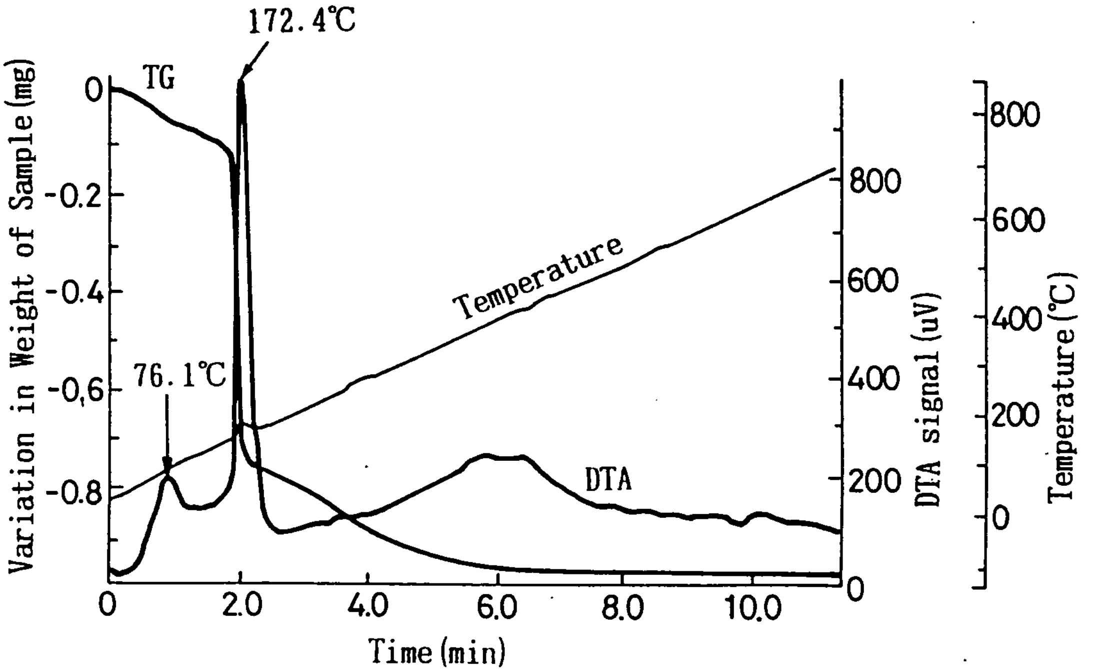
172.4℃
76.1℃
TG
Temperature
DTA
Variation in Weight of Sample (mg)
0
-0.2
-0.4
-0.6
-0.8
0
2.0
4.0
6.0
8.0
10.0
Time (min)
800
600
400
200
0
DTA signal (uV)
800
600
400
200
0
Temperature (℃)

Fig. 5

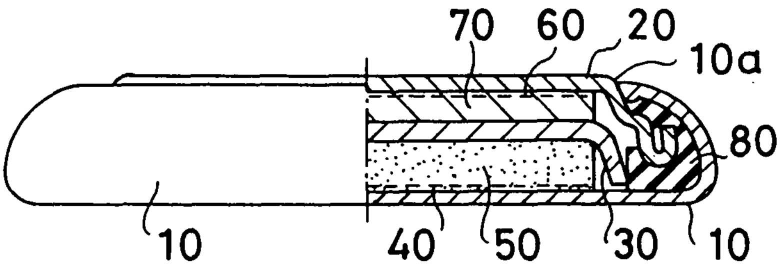
70
60
20
10a
80
10
40
50
30
10

Fig. 6

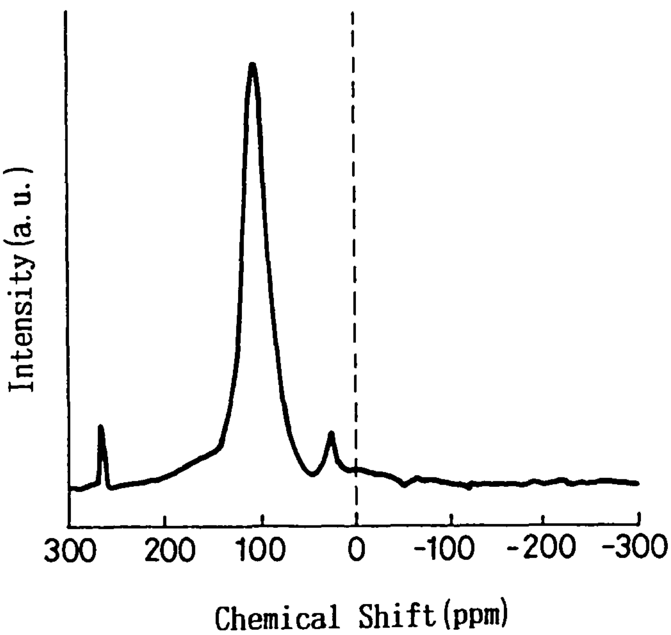
Intensity (a. u.)
300
200
100
0
-100
-200
-300
Chemical Shift (ppm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 567658 A


### Non-patent literature cited in the description


- **TANAKA et al.** *Collected Summaries of Autumn Meeting of Electrochemical Society, Japan,* 1992, 129
- **P. KOVACIC ; A. KYRIAKIS.** *J. Am. Chem. Soc.,* 1963, vol. 85, 454-458
- *J. Am. Chem. Soc.,* 1959, vol. 81, 448-452
- **T. YAMAMOTO ; A. YAMAMOTO.** *Chemistry Letters,* 1977, 353-356
- **G. FROYER et al.** *Polymer,* 1982, vol. 23, 1103
- **C. E. BROWN et al.** J. Polymer Science, Polym. Chem. 1986, vol. 24, 255